# EUROPEAN PATENT APPLICATION

(11) **EP 3 041 243 A1**
(43) Date of publication of application: **06.07.2016**
(21) Application number: 14838957.0
(22) Date of filing: 12.08.2014
(51) Int. Cl.: H04N 21/239, G06F 13/00, H04N 21/2183, H04N 21/61

(54) **PROXY-SERVER DEVICE, INFORMATION PROCESSING METHOD, PROGRAM, TERMINAL DEVICE, AND CONTENT PROVISION SYSTEM**

(30) Priority: 26.08.2013 JP 2013174199
(71) Applicant: Sony Corporation, Tokyo 108-0075 (JP)
(72) Inventor: YAMAGISHI Yasuaki, Tokyo 108-0075 (JP)
(74) Representative: Witte, Weller & Partner Patentanwälte mbB
(86) International application number: PCT/JP2014/071261
(87) International publication number: WO 2015/029767

(57) **Abstract**

The present disclosure relates to a proxy server device, an information processing method, a program, a terminal device, and a content supply system that can enhance the response performance with respect to requests from a reception side by optimizing caching by a proxy server. A proxy-server device according to the present disclosure includes: a monitoring portion that monitors a request for acquisition of a metafile containing information that a terminal device needs to receive a stream of content, the request being transmitted by the terminal device to a content supply device that delivers the content over a network in accordance with adaptive streaming technology; an analysis portion that analyzes the monitored request for acquisition of the metafile; and a database portion that accumulates an analysis result of the analysis portion. The present disclosure can be applied to a system that performs streaming delivery of content.

## Description

### Technical Field

The present disclosure relates to a proxy-server device, an information processing method, a program, a terminal device, and a content supply system, and in particular to a proxy-server device, an information processing method, a program, a terminal device, and a content supply system capable of efficiently executing streaming delivery of content.

### Background Art

As a globally standardized moving picture delivery protocol that can be used for moving picture delivery over the Internet, there is known MPEG-DASH (Moving Picture Experts Group-Dynamic Adaptive Streaming over HTTP, hereinbelow called DASH), which uses HTTP unicast delivery similar to browsing of websites and the like (for example, refer to Non-Patent Literature 1).

In DASH, adaptive streaming technology is achieved. That is to say, on the content supply side in DASH, multiple streams are prepared as the same content in which image quality and field angle size are altered with respect to the communication environment of the delivery path and the capability and state of the reception side. On the other hand, among the multiple streams that the supply side has prepared, the reception side selects, receives and plays back the optimum stream in accordance with what it is itself capable of receiving and its own decoding capability.

In this way, in DASH, metadata called an MPD (Media Presentation Description) is supplied from the supply side to the reception side so that the reception side can adaptively select and receive a stream.

The address (url information) of the WEB server that is the supply source of segment streams of chunked content (media data such as Audio/Video/Subtitle) is described in the MPD. The reception side, based on the url information, transmits an HTTP request to the WEB server that is the content supply source, and receives and plays back the segment stream that the WEB server delivers over unicast in accordance with this HTTP request.

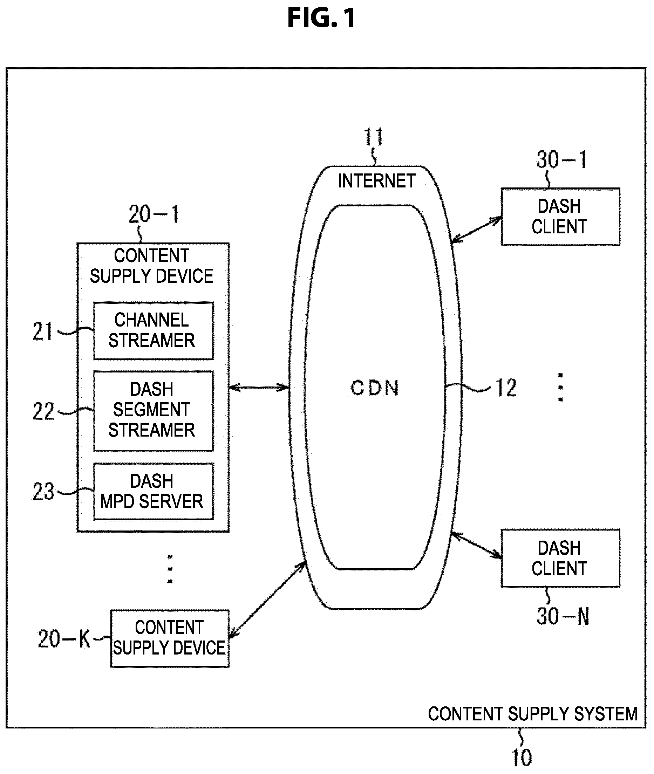

FIG. 1 shows an example of the constitution of a content supply system that delivers segment streams of content based on DASH.

This content supply system 10 is constituted from a plurality of content supply devices 20-1 to 20-K on the side supplying content and a plurality of DASH clients 30-1 to 30-N on the side receiving content. Hereinbelow, when there is no need to distinguish between the content supply devices 20-1 to 20-K, they will simply be called the content supply device 20. The same applies to the DASH clients 30-1 to 30-N.

The content supply device 20 and the DASH client 30 are each connected to the Internet 11. A CDN (Contents Delivery Network) 12 is constructed on the Internet 11.

The content supply device 20 is one that delivers a plurality of segment streams of the same content but different bit rates, and has a channel streamer 21, a DASH segment streamer 22, and a DASH MPD server 23.

The channel streamer 21 controls the content source data for delivery to the DASH client 30, and generates a plurality of streaming data of different bit rates from the content source data and outputs them to the DASH segment streamer 22.

The DASH segment streamer 22 temporally divides (breaks into chunks) each streaming data into segments to generate a segment stream. Also, the DASH segment streamer 22 files and holds the segment stream, and as a WEB server, in accordance with a request (HTTP request) from the DASH client 30, delivers over HTTP unicast the file of the segment stream to the DASH client 30 that is the request source via the CDN 12. Moreover, the DASH segment streamer 22 notifies the DASH MPD server 23 of the supply source address of the segment stream file.

The DASH MPD server 23 generates an MPD containing an address or the like indicating the supply source of the segment stream file, which the DASH client 30 requires in order to acquire the segment stream file. Also, the DASH MPD server 23, as a WEB server, in accordance with a request (HTTP request) from the DASH client 30, delivers over HTTP unicast the generated MPD to the DASH client 30 that is the request source via the CDN 12.

The DASH client 30 requests the MPD from the DASH MPD server 23, and in response, receives the MPD delivered over HTTP unicast. Moreover, the DASH client 30, based on the received MPD, requests a segment stream file from the DASH segment streamer 22, and in response receives and plays back the segment stream file that is delivered over HTTP unicast.

Note that a proxy server 13 that caches the MPD and segment stream file delivered over HTTP unicast via the CND 12 is provided in the CDN 12. The proxy server 13, instead of the DASH MPD server 23 or the DASH segment streamer 22 as WEB servers, delivers over HTTP unicast to the request source the cached MPD or segment stream file.

### Citation List

### Non-Patent Literature

Non-Patent Literature 1: Hirabayashi, Mitsuhiro. "Realizing Moving Image Delivery With No Drop-outs in an Existing Web Server." Nikkei Electronics, March 19, 2012

### Summary of Invention

### Technical Problem

As mentioned above, by providing the proxy server 13 on the CDN 12, it is possible to enhance the response performance with respect to requests from the DASH client 30.

However, the proxy server 13 being able to deliver the MPD or segment stream instead of the DASH MPD server 23 or the DASH segment streamer 22 as WEB servers is limited to the case of having already cached them. That is, while it is capable of promptly responding in the case of another DASH client 30 making a request and that which has been delivered being accordingly cached, in the case of something that is not cached having been requested, it has not been able to respond.

The present disclosure was achieved in view of such circumstances, and increases response performance with respect to requests from a reception side by optimizing caching by a proxy server.

### Solution to Problem

According to a first aspect of the present disclosure, a proxy-server device includes: a monitoring portion that monitors a request for acquisition of a metafile containing information that a terminal device needs to receive a stream of content, the request being transmitted by the terminal device to a content supply device that delivers the content over a network in accordance with adaptive streaming technology; an analysis portion that analyzes the monitored request for acquisition of the metafile; and a database portion that accumulates an analysis result of the analysis portion.

The monitoring portion can additionally monitor a request for acquisition of a stream of the content that the terminal device has transmitted to the content supply device based on the metafile. The analysis portion can additionally analyze the monitored request for acquisition of the stream.

The proxy-server device according to the first aspect of the present disclosure can further include: a caching portion that caches at least one of the metafile and the stream delivered over the network in accordance with a priority based on the accumulated analysis result.

The caching portion can register or cancel registration of a policy of the caching in accordance with a request from the terminal device.

According to the first aspect of the present disclosure, an information processing method of a proxy-server device includes: a monitoring step of monitoring, by the proxy-server device, a request for acquisition of a metafile containing information that a terminal device needs to receive a stream of content, the request being transmitted by the terminal device to a content supply device that delivers the content over a network in accordance with adaptive streaming technology; and an analyzing step of analyzing, by the proxy-server device, the monitored request for acquisition of the metafile, and accumulating the analysis result.

According to the first aspect of the present disclosure, a program causes a computer to function as: a monitoring portion that monitors a request for acquisition of a metafile containing information that a terminal device needs to receive a stream of content, the request being transmitted by the terminal device to a content supply device that delivers the content over a network in accordance with adaptive streaming technology; an analysis portion that analyzes the monitored request for acquisition of the metafile; and a database portion that accumulates an analysis result of the analysis portion.

In the first aspect of the present disclosure, a request is monitored for the acquisition of a metafile containing information that a terminal device needs to receive a stream of content, the request being transmitted by the terminal device to a content supply device that delivers content over a network in accordance with adaptive streaming technology, the monitored request for acquisition of the metafile is analyzed, and the analysis result is accumulated.

According to a second aspect of the present disclosure, a terminal device includes: a reception/playback portion that transmits a request for acquisition of a metafile containing information that the terminal device needs to receive a stream of content to a content supply device that delivers the content over a network in accordance with adaptive streaming technology, receives the metafile delivered from the content supply device in accordance with the request for acquisition of the metafile, transmits a request for acquisition of a stream of the content to the content supply device based on the metafile, and receives and plays back the stream delivered from the content supply device in accordance with the request for acquisition of the stream; and a registration portion that makes a request for registration of a policy of caching at least one of the metafile and the stream to a proxy-server device that by proxy performs an operation of the content supply device. The proxy-server device includes a monitoring portion that monitors a request for acquisition of a metafile containing information that a terminal device needs to receive a stream of the content, the request being transmitted by the terminal device to a content supply device that delivers the content over a network in accordance with adaptive streaming technology, an analysis portion that analyzes the monitored request for acquisition of the metafile, and a database portion that accumulates an analysis result of the analysis portion.

The registration portion can additionally request cancellation of registration of the policy of caching to the proxy-server device that by proxy performs an operation of the content supply device.

The terminal device according to the second aspect of the present disclosure can further include: a script requesting portion that requests from a portal server a script that performs a setting for connecting to a proxy-server that is optimal for the terminal device, and performs the setting by executing the script provided from the portal server.

In the second aspect of the present disclosure, a request is made for registration of a policy of caching of at least one of a metafile and a stream to a proxy-server device that by proxy performs an operation of the content supply device.

According to a third aspect of the present disclosure, a content supply system includes: a content supply device that delivers content over a network in accordance with adaptive streaming technology; a terminal device that receives and plays back a stream of the content; and a proxy-server device that is provided between the content supply device and the terminal device. The proxy-server device includes a monitoring portion that monitors a request for acquisition of a metafile containing information that the terminal device needs to receive a stream of the content, the request being transmitted by the terminal device to the content supply device, an analysis portion that analyzes the monitored request for acquisition of the metafile, and a database portion that accumulates an analysis result of the analysis portion. The terminal device includes a reception/playback portion that transmits the request for acquisition of the metafile to the content supply device, receives the metafile delivered from the content supply device in accordance with the request for acquisition of the metafile, transmits the request for acquisition of a stream of the content to the content supply device based on the metafile, and receives and plays back the stream delivered from the content supply device in accordance with the request for acquisition of the stream, and a registration portion that makes a request for registration of a policy of caching at least one of the metafile and the stream to the proxy-server device that by proxy performs an operation of the content supply device.

In the third aspect of the present disclosure, a request is monitored for the acquisition of a metafile containing information that a terminal device needs to receive a stream of content, the request being transmitted by the terminal device to a content supply device that delivers content over a network in accordance with adaptive streaming technology; the monitored request for acquisition of the metafile is analyzed; and the analysis result is accumulated, by a proxy-server device. Also, a request is made for registration of a policy of caching of at least one of a metafile and a stream to a proxy-server device that by proxy performs an operation of the content supply device.

### Advantageous Effects of Invention

According to the first aspect of the present disclosure, it is possible to optimize caching and it is possible to increase response performance with respect to requests from a reception side.

According to the second aspect of the present disclosure, it is possible to optimize caching by a proxy server.

According to the third aspect of the present disclosure, it is possible to quickly deliver a stream to a reception side.

### Brief Description of Drawings

[FIG. 1] FIG. 1 is a block drawing that shows an example of the configuration of a conventional content supply system.

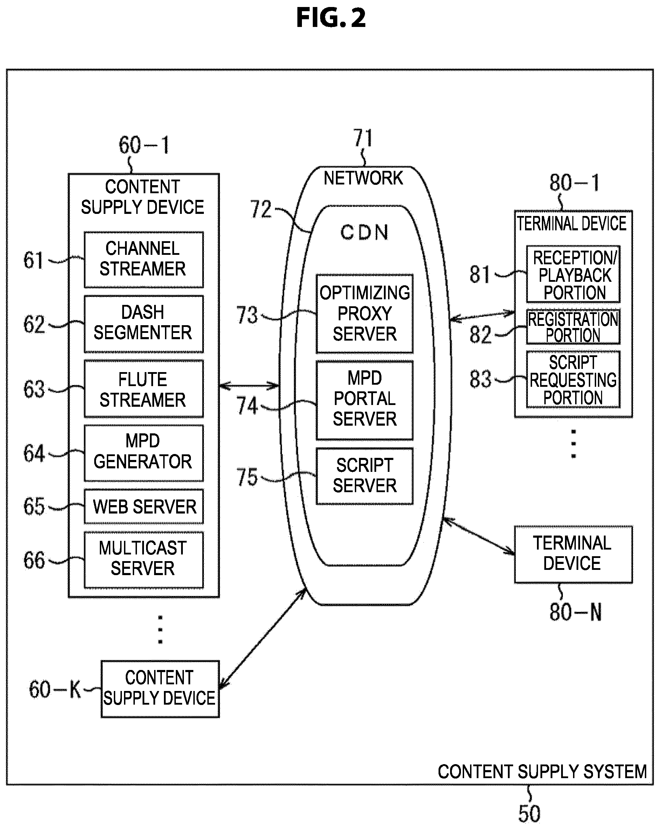

[FIG. 2] FIG. 2 is a block drawing that shows a configuration example of a content supply system applying the present disclosure.
[FIG. 3] FIG. 3 is a block drawing that shows a configuration example of an optimizing proxy server.
[FIG. 4] FIG. 4 is a flowchart that illustrates processing of the content supply device.
[FIG. 5] FIG. 5 is a flowchart that illustrates request analysis processing by the content supply system.
[FIG. 6] FIG. 6 is a flowchart that illustrates multicast precache processing by the content supply system.
[FIG. 7] FIG. 7 is a flowchart that illustrates unicast precache processing by the content supply system.
[FIG. 8] FIG. 8 is a flowchart that illustrates script provision processing by the content supply system.
[FIG. 9] FIG. 9 is a block drawing that shows a configuration example of a computer.

### Description of Embodiments

Hereinafter, a best mode (hereinafter called embodiment) for carrying out the present disclosure will be described.

### Configuration Example of Content Supply System

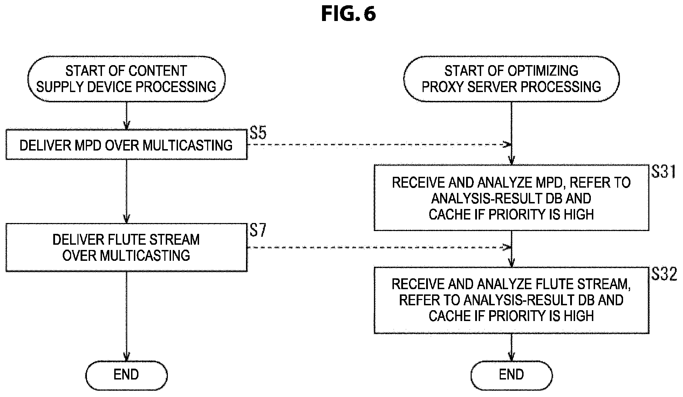

FIG. 6 shows a configuration example of the content supply system that is an embodiment of the present disclosure.

This content supply system 50 is constituted from a plurality of content supply devices 60-1 to 60-K, a CDN 72 constructed on a network 71, and a plurality of terminal devices 80-1 to 80-N. The content supply devices 60-1 to 60-K and the terminal devices 80-1 to 80-N are connected to the network 71.

Hereinbelow, when there is no need to distinguish between the content supply devices 60-1 to 60-K, they will simply be called the content supply device 60. The same applies to the terminal devices 80-1 to 80-N.

The content supply device 60 is provided with a channel streamer 61, a DASH segmenter 62, a FLUTE streamer 63, an MPD generator 64, a WEB server 65, and a multicast server 66.

Note that the channel streamer 61 and the multicast server 66 that the content supply device 60 has may be arranged integrally, or may be arranged distributed over the Internet or the like.

The channel streamer 61 controls the source data of content for delivery to the terminal device 80, and generates a plurality of streaming data of differing bit rates from source data of the same content. Moreover, the channel streamer 61 outputs the generated streaming data to the DASH segmenter 62.

The DASH segmenter 62, by dividing the streaming data temporally into periods, and further splitting it into segments, generates a segment stream such as fragmentedMP4 and outputs it to the WEB server 65 and the FLUTE streamer 63. Moreover, the DASH segmenter 62 notifies the MPD generator 64 of metadata including the address information of the WEB server 65 that becomes the supply source of the file of the generated segment stream.

The MPD generator 64 generates an MPD required for the terminal device 80 to receive the segment stream, and outputs it to the FLUTE streamer 63 and the WEB server 65.

The FLUTE streamer 63, by storing in FLUTE packets the segment stream inputted from the DASH segmenter 62, generates a FLUTE stream and outputs it to the multicast server 66. Also, the FLUTE streamer 63 outputs the MPD inputted from the MPD generator 64 to the multicast server 66.

The WEB server 65, in accordance with the MPD acquisition request (HTTP request) from the terminal device 80, delivers over HTTP unicast the MPD inputted from the MPD generator 64 via the CDN 72 to the terminal device 80 that is the request source. Moreover, the WEB server 65, in accordance with the segment-stream acquisition request (HTTP request) from the terminal device 80, delivers over HTTP unicast the file of the segment stream inputted from the DASH segmenter 62 via the CDN 72 to the terminal device 80 that is the request source.

The multicast server 66 delivers over FLUTE multicast the MPD from the FLUTE streamer 63 via the CDN 72. Also, the multicast server 66 delivers over FLUTE multicast the FLUTE stream from the FLUTE streamer 63 via the CDN 72. In addition, for example USD of (e)MBMS, OMA-ESG, and the like, are used for the dissemination of portal channels of FLUTE multicast delivery.

The network 71 includes a two-way communication network represented by the Internet, a one-way communication network such as a terrestrial broadcasting network or a satellite broadcasting network, and a portable telephone communication network such as e-MBMS having an interaction channel performing two-way communication and a broadcast/multicast channel performing one-way communication.

The CDN 72 is constructed on the network 71. A plurality of optimizing proxy servers 73, MPD portal servers 74, and script servers 75 are provided in the CDN 72. Moreover, although its graphic display is omitted, a conventional proxy server 13 may exist in the CDN 72.

The optimizing proxy server 73, by monitoring and analyzing MPD acquisition requests and segment-stream acquisition requests from the terminal device 80, infers the receiving ability, decoding ability, user preferences, state and the like of the terminal device 80 that is connected to it, and turns them into a database as statistical information (referred to below as request analysis processing).

Also, the optimizing proxy server 73, by monitoring metadata (such as OMA-ESG and the like) in which the content of the MPD and FLUTE stream delivered over multicast via the CDN 72 are described and collating with its own database, judges whether or not their priority is high (the possibility of an acquisition request henceforth transmitted from the terminal device 80 that is connected to it being high). Then it caches the MPD or FLUTE stream with a high priority (referred to below as multicast precache processing).

Also, the optimizing proxy server 73, by monitoring the MPD and the segment stream delivered over unicast via the CDN 72 and collating with its own database, determines whether or not they are of a high priority. Then, it caches the MPD and segment stream with a high priority (referred to below as unicast cache processing).

Moreover, the optimizing proxy server 73 can search for and specify the MPDs and segment streams with a high priority from the MPD portal server 74, request from the content supply device 60 the specified MPDs and segment streams and cache those that are delivered over HTTP unicast in response.

Also furthermore, the optimizing proxy server 73, based on control from the terminal device 80, registers and cancels registration of the policies of multicast precache processing and unicast precache processing (referred to below as precaching policy registration processing).

The MPD portal server 74 accesses the content supply devices 60 existing in a plurality and searches for MPD and segment streams satisfying predetermined conditions.

The script server 75, in accordance with a request from the terminal device 80, provides a script for preferential connection to the optimizing server 73 that is optimal for the terminal device 80 (for example, whether it is located in the nearest vicinity, and whether the terminal device 80 in the case of not being able to receive multicast delivery is capable of reception not having it) (script provision processing).

The terminal device 80 is equipped with a reception/playback portion 81, a registration portion 82, and a script requesting portion 83. The reception/playback portion 81 acquires an MPD, and based on the MPD receives and plays back a segment stream and FLUTE stream. The registration portion 82 executes the process of registering or cancelling the registration of a precaching policy of precache processing in the optimizing proxy server 73. The script requesting portion 83 requests from the script server 75 a script for automatically connecting to the optimizing proxy server 73 that is optimal for itself (for example, one that is located in the nearest vicinity, one that can receive a broadcasting network that itself cannot receive).

### Detailed Configuration Example of the Optimizing Proxy Server 73

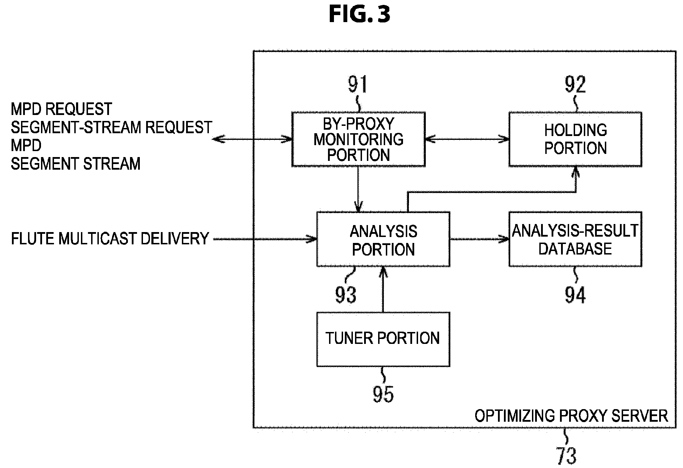

Next, FIG. 3 shows a detailed configuration example of the optimizing proxy server 73.

The optimizing proxy server 73 is provided with a by-proxy monitoring portion 91, a holding portion 92, an analysis portion 93, an analysis-result database 94, and a tuner portion 95.

The by-proxy monitoring portion 91 monitors MPD acquisition requests and segment-stream acquisition requests from the terminal device 80, and in the case of the requested MPD or segment stream being cached in the holding portion 92, reads it out from the holding portion 92 and delivers it over unicast to the request source. Also, the by-proxy monitoring portion 91 outputs to the analysis portion 93 the MPD acquisition requests and segment-stream acquisition requests that have been monitored. Moreover, the by-proxy monitoring portion 91 performs monitoring of MPDs and segment streams that are delivered over HTTP unicast and outputs them to the analysis portion 93.

The holding portion 92 holds (caches) MPDs and segment streams input from the analysis portion 93 and judged as being of high priority. Also, the holding portion 92 holds MPDs and FLUTE streams judged as being of high priority that are input from the precaching portion 95.

The analysis portion 93 analyzes monitored MPD acquisition requests and segment-stream acquisition requests. Specifically, the URL of the MPD, the profile information described in the MPD/@profile, the maximum value of the segment size (the value of @ duration or the value of @maxSegmentDuration, @maxSubSegmentDuration), the content of the metadata describing content looked up by ProgramInformation (in particular, retrieving and analyzing the title, outline, genre and the like of content as processing load allows and accumulating them as preference information), the content of schema looked up by Role and the content of accessibility schema looked up by Accessibility (for example, in the case of the presence of a segment acquisition request for a stream including a voice guide being monitored, it is possible to infer the user's preference for a voice stream, degree of disability, and the like), the type of language described in @lang, the rating information looked up by Rating, the distribution of @bandwidth, the information of vertical and horizontal pixel numbers expressed by the combination of @width and @height, sampling rate information described in @audioSamplingRate, codec type described in @codec, audio channel configuration information looked up by audioChannelConfiguration, reading out the type of DRM looked up by contentProtection, and causing these contents to be held as statistical information linked to acquisition request frequency in the analysis-result database 94.

Moreover, the analysis portion 93 judges the priority of the MPD and segment stream input from the by-proxy monitoring portion 91 and monitored from HTTP unicast delivery, and causes those with a high priority to be held in the holding portion 92. Also, the analysis portion 93 judges the priority of the MPD and FLUTE stream input from the tuner portion 95 and delivered over FLUTE multicast and causes those with a high priority to be held in the holding portion 92.

The analysis-result database 94 holds clock information of the analysis result inputted from the analysis portion 93.

The tuner portion 95 receives MPDs and FLUTE streams delivered over FLUTE multicast and their metadata, and outputs them to the analysis portion 93.

### Operation of Content Supply System 50

Next, the operation of the content supply system 50 will be described.

### Description of Content Delivery Processing

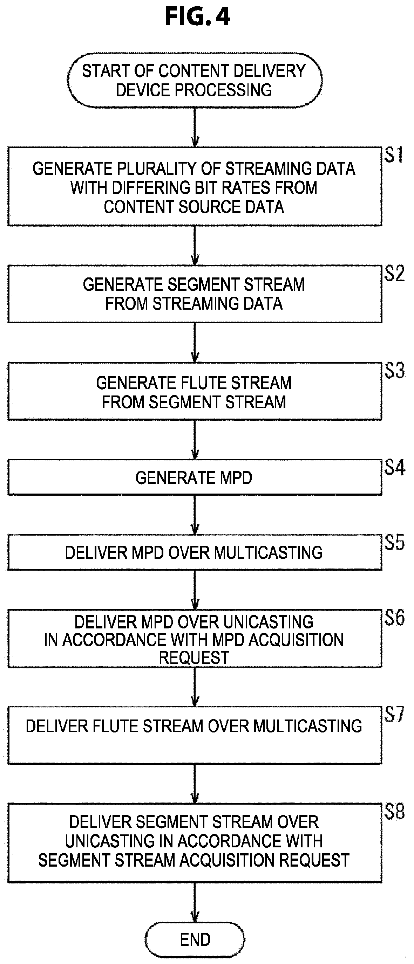

FIG. 4 is a flowchart that describes content delivery processing by the content supply device 60.

In Step S1, the channel streamer 61 generates a plurality of streaming data of different bit rates from the content source data, and outputs them to the DASH segment 62 and the WEB server 65.

In Step S2, the DASH segmenter 62 generates a segment stream such as fragmented MP4 from the streaming data and outputs it to the FLUTE streamer 63 and the WEB server 65. Also, the DASH segmenter 62 notifies the MPD generator 64 of the URL of the supply source of the generated segment stream.

In Step S3, the FLUTE streamer 63 generates a FLUTE stream by storing the segment stream in a FLUTE packet and outputs it to the multicast server 66. In Step S4, the MPD generator 64 generates an MPD and outputs it to the FLUTE streamer 63 and the WEB server 65.

In Step S5, the FLUTE streamer 63 outputs the MPD to the multicast server 66. The multicast server 66 distributes the MPD over FLUTE multicast via the CDN 72.

In Step S6, the WEB server 65, in the case of there being an MPD acquisition request (HTTP request) from the terminal device 80, delivers over HTTP unicast the MPD via the CDN 72 in response.

In Step S7, the multicast server 66 delivers the FLUTE stream over FLUTE multicast via the CDN 72. In Step S8, the WEB server 65, in the case of there being a segment stream acquisition request (HTTP request) from the terminal device 80, delivers the segment stream over HTTP unicast to the request source via the CDN 72. This concludes the description of the content supply processing by the content supply device 60.

### Description of Request Analysis Processing

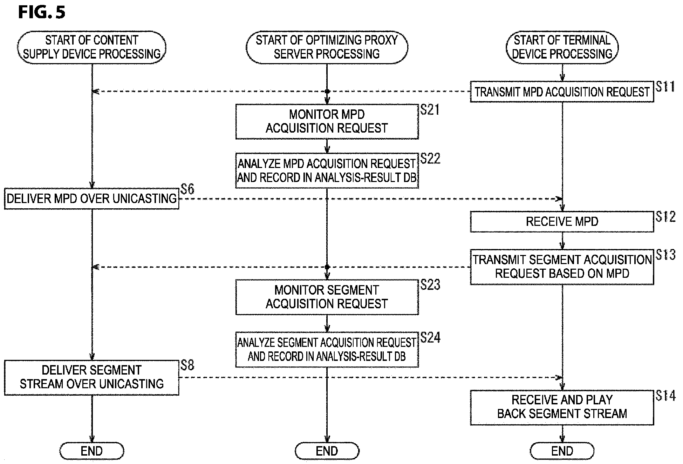

Next, FIG. 5 is a flowchart that describes the request analysis processing by the optimizing proxy server 73.

When the terminal device 80 transmits an MPD acquisition request to the WEB server 65 via the CDN 82 as Step S11, in Step S21 the by-proxy monitoring portion 91 of the optimizing proxy server 73 monitors the MPD acquisition request and outputs it to the analysis portion 93. In Step S22, the analysis portion 93 analyzes the MPD acquisition request, and records the result in the analysis-result database 94.

Note that in the case of the MPD corresponding to the MPD acquisition request monitored in Step S21 being already cached in the holding portion 92, the by-proxy monitoring portion 91 reads out the MPD from the holding portion 92 and delivers it over HTTTP unicast to the request source. FIG. 5 is an example of the case of the MPD not having been cached, and in this case, as Step S6 of the content supply processing described above, the WEB server 65 delivers over HTTP unicast to the request source the MPD corresponding to the MPD acquisition request via the CDN 72.

The MPD that is delivered over HTTP unicast is received by the terminal device 80 as Step S12. When the terminal device 80 transmits to the WEB server 65 via the CDN 82 the segment-stream acquisition request based on the MPD as Step S13, in Step S23, the by-proxy monitoring portion 91 monitors the segment-stream acquisition request and outputs it to the analysis portion 93. In Step S24, the analysis portion 93 analyzes the segment-stream acquisition request and records the result in the analysis-result database 94.

Note that in the case of the holding portion 92 having already cached the segment stream corresponding to the segment-stream acquisition request monitored in Step S23, the by-proxy monitoring portion 91 reads out the segment stream from the holding portion 92 and delivers it over HTTTP unicast to the request source. FIG. 5 is an example of the case of the segment stream not having been cached, and in this case, as Step S8 of the content supply processing described above, the WEB server 65 delivers over HTTP unicast to the request source the segment stream corresponding to the segment-stream acquisition request via the CDN 72.

The segment stream delivered over HTTP unicast is received and played back by the terminal device 80 as Step S14. This concludes the request analysis processing.

By the request analysis processing described above, it is possible to accumulate statistical information relating to the receiving ability, decoding ability, user preferences, and state of the terminal device 80 in the analysis-result database 94 of the optimizing proxy server 73.

### Description of Multicast Precache Processing

Next, FIG. 6 is a flowchart that describes multicast precache processing by the optimizing proxy server 73.

When the multicast server 66 of the content supply device 60 delivers over FLUTE multicast an MPD as Step S5 of the content supply processing described above, in Step S31, the tuner portion 95 of the optimizing proxy server 73 receives the MPD and outputs it to the analysis portion 93. The analysis portion 93 refers to the analysis-result database 94, and in the case of the MPD being one with a high priority, causes it to be cached in the holding portion 92.

Similarly, when the multicast server 66 of the content supply device 60 delivers over FLUTE multicast a FLUTE stream as Step S7 of the content supply processing described above, in Step S32, the tuner portion 95 receives the FLUTE stream and outputs it to the analysis portion 93. The analysis portion 93 refers to the analysis-result database 94, and in the case of the FLUTE stream being one with a high priority, causes it to be cached to the holding portion 92. This concludes the multicast precache processing.

With the multicast precache processing described above, it is possible to cache an MPD and FLUTE stream with a high priority in the holding portion 92. Note that when supplying a cached MPD or FLUTE stream to the terminal device 80, it is made to be delivered over unicast. Accordingly, for example even in the case of the terminal device 80 not having the capability to receive a FLUTE stream, it is possible to supply them to the terminal device 80.

### Description of Unicast Precache Processing

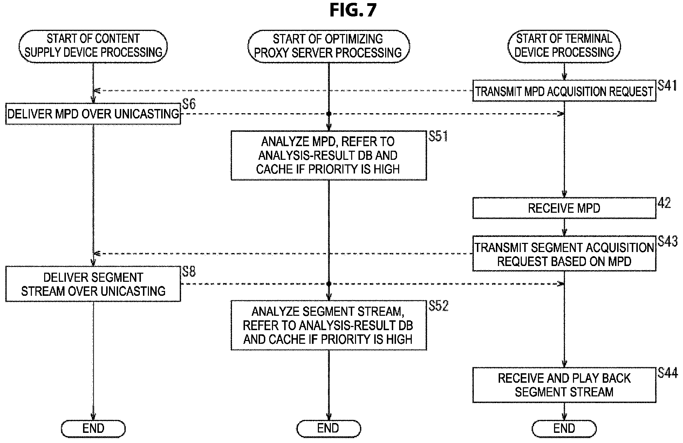

Next, FIG. 7 is a flowchart that describes unicast precache processing by the optimizing proxy server 73.

When the terminal device 80 transmits an MPD acquisition request as Step S41, the WEB server 65 delivers over HTTP unicast an MPD corresponding to the MPD acquisition request as Step S6 of the content supply processing described above, and the terminal device 80 receives the MPD delivered over HTTP unicast as Step S42.

As Step S51, the by-proxy monitoring portion 91 of the optimizing proxy server 73 monitors this MPD delivered over HTTP unicast and outputs it to the analysis portion 93. The analysis portion 93 judges the priority of the MPDs delivered over HTTP unicast, and causes those with a high priority to be held in the holding portion 92. Note that regarding the MPD acquisition request that the terminal device 80 has transmitted, it is monitored and analyzed, and as request analysis processing the result is accumulated in the analysis-result database 94 as described above.

When the terminal device 80 transmits a segment-stream acquisition request based on the received MPD as Step S43, the WEB server 65 delivers over HTTP unicast the segment stream corresponding to the segment-stream acquisition request as Step S8 of the content supply process described above, and the terminal device 80 receives and plays back the segment stream delivered over HTTP unicast as Step S42.

As Step S52, the by-proxy monitoring portion 91 of the optimizing proxy server 73 monitors this segment stream delivered over HTTP unicast and outputs it to the analysis portion 93. The analysis portion 93 judges the priority of the segment streams delivered over HTTP unicast, and causes those with a high priority to be held in the holding portion 92. Note that regarding the segment-stream acquisition request that the terminal device 80 has transmitted, it is monitored and analyzed, and the result is accumulated in the analysis-result database 94 as described above as request analysis processing.

By the unicast precache processing described above, it is possible to cache MPDs and segment streams having a high priority in the holding portion 92. Accordingly, in the case of them being requested from the terminal device 80, it is possible to deliver them to the request source faster than by delivery over unicast.

### Description of Script Provision Processing

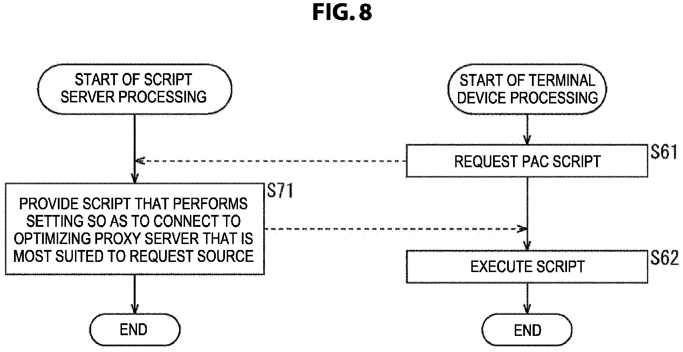

Next, FIG. 8 is a flowchart that describes the script provision processing.

In Step S61, when the script requesting portion 83 of the terminal device 80, using WPAD (Web Proxy Auto-Discover Protocol) or the like, transmits to the CDN 72 a request for a PAC (Proxy Auto-Config) script that performs a setting to be able to preferentially connect to the optimizing proxy server 72 that is optimal for itself, this request is received by the script server 75.

In Step S71, the script server 75 specifies the optimizing proxy server 73 optimal for the terminal device 80 that transmitted the PAC script request, and provides to the request source a script that performs a setting to connect by the terminal device 80 to the optimizing proxy server 73.

In Step S72, the script server 75, the script requesting portion 83 of the terminal device 80 executes the provided script. Thereby, the setting to be able to preferentially connect to the optimizing proxy server 73 that is optimal for the terminal device 80 is performed. This concludes the script provision processing.

According to the script request processing described above, among the optimizing proxy servers 73 that exist in a plurality in the CDN 72, the terminal device 80 is able to automatically perform a setting to be able to preferentially connect to that which is optimal for itself.

### Description of Precaching Policy Registration Processing

Next, the process of registering or cancelling the registration of a precaching policy by control from the terminal device 80 side will be described.

In the case of registering a precaching policy, the registration portion 82 of the terminal device 80, using an API (Application Program Interface) that the optimizing proxy server 73 provides, designates for example an API such as the following in a server-side script that controls registration of a precaching policy by the optimizing proxy server 73. http://dashProxy.a.com/precacheManager/subscribe?codec="urn:b.com:codecType:a vc"&rating="urn: c.com:ratingLevel:PG-13"&priority=1

http://dashProxy.a.com/precacheManager/subscribe in the above API shows the address of the server-side script address in the optimizing proxy server 73. The subsequent "urn:b.com:codecType:avc"&rating="urn: c.com:ratingLevel:PG-13"&priority=1" are the API parameters passed to the server-side script.

The aforementioned API parameter example, in which the type of codec stated in the MPD that is the target of precaching (or described in the metadata of a stream referred to from the MPD) is the codec specified by "urn:a.com:codecType:avc", which is the codec dictionary item uri, and the type of rating is the rating level specified by "urn: c.com:ratingLevel:PG-13," which is the rating dictionary item uri, is one that designates the precaching priority of an MPD describing a stream satisfying these two conditions to priority = 1 (the smaller the number the higher the priority).

Below is another example of an API designated for a server side script that controls the addition of statistical information by the optimizing proxy server 73. http://dashProxy.a.com/precacheManager/subscribe?genre="urn:b.com:genre:sports" &priority=2

The API parameter in the above API, in which the type of genre stated in the MPD that is the target of precaching (or described in the metadata of a stream referred to from the MPD) is designated by "urn:b.com:genre:sports", which is the genre dictionary item uri, is one that designates the precaching priority to priority=2.

In the case of cancelling registration of a precaching policy, making use of the API that the optimizing proxy server 73 provides, the registration portion 82 of the terminal device 80 designates for example an API such as the following in a server-side script that controls deletion of a precaching policy by the optimizing proxy server 73. http://dashProxy.a.com/precacheManager/unsubscribe?genre="urn:b.com:genre:sport s"

The API parameter in the above API is one that cancels the registration from precaching candidates of an MPD in which the genre is described, the type of genre being designated by "urn:b.com:genre:sports", which is the genre dictionary item uri.

According to the precaching policy registration or registration cancelling processing described above, it is possible to perform registration and cancelation of the registration of a precaching policy by direct control from the terminal device 80 side, and not just with statistical information that is accumulated in the analysis-result database 94. Note that which of the priority based on the statistical information of the analysis-result database 94 or the priority registered by direct control from the terminal device 80 side is made the final priority of the precache processing can be defined by a database configuration parameter (or an API that sets it).

In the above manner, in the embodiment, by providing the optimizing proxy server 73 in the CDN 72, it is possible to increase the response performance with respect to requests from the terminal device 80.

The content supply device 60 that executes a series of processes described above and the terminal device 80 can be realized by a computer executing software, in addition to constituting them with hardware. A computer built with special-purpose hardware, or for example a general-purpose personal computer or the like capable of executing various functions by installing various programs are included in such a computer.

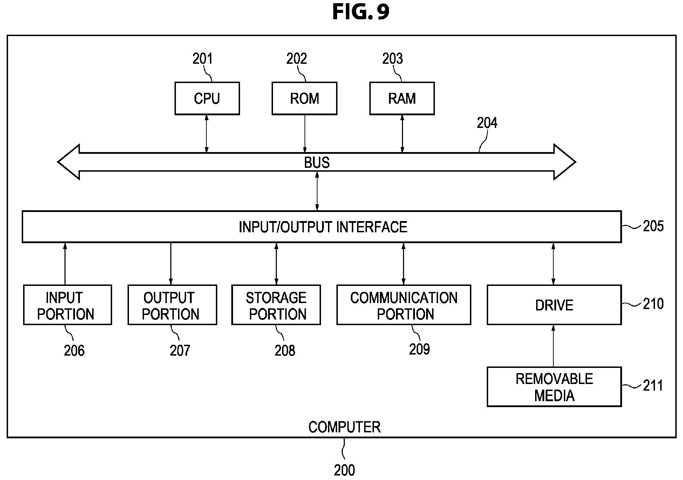

FIG. 9 is a block drawing that shows a configuration example of hardware of the aforementioned computer.

In this computer 200, a CPU (Central Processing Unit) 201, ROM (Read Only Memory) 202, and RAM (Random Access Memory) 203 are connected to each other by a bus 204.

An input/output interface 205 is also connected to the bus 204. An input portion 206, an output portion 207, a storage portion 208, a communication portion 209, and a drive 210 are connected to the input/output interface 205.

The input portion 206 includes a keyboard, a mouse, a microphone or the like. The output portion 207 includes a display, a speaker, or the like. The storage portion 208 includes a hard disk, a non-volatile memory, or the like. The communication portion 209 includes a network interface or the like. The drive 210 drives a removable media 211 such as a magnetic disk, an optical disk, a magnetic-optical disk, or a semiconductor memory.

In the computer 200 that is constituted in the above manner, the CPU 201 loads and executes a program stored in the storage portion 208 via the input/output interface 205 and the bus 204, whereby the aforementioned series of processes are performed.

The program that the computer 200 (CPU 201) executes may be provided by being recorded for example on the removable media 211 such as a package media. Alternatively, the program may be provided via a wired or wireless transmission medium such as a local area network, the Internet, and a digital satellite broadcast.

The program may be installed in the storage portion 208 via the input/output interface 205 by loading the removable media 211 in the drive 210. Also, the program can be received by the communication portion 209 via a wired or wireless transmission medium and installed in the storage portion 208. In addition, the program can also be installed in advance in the ROM 202 or the storage portion 208.

The program executed by the computer 200 may be a program in which the processing is performed in chronological order in the sequence described in the present specification, or a program in which the processing is performed in parallel or at a required timing, such as when called.

An embodiment of the present disclosure is not limited to the above embodiment, and may assume various alterations within the scope of the present disclosure.

Additionally, the present technology may also be configured as below.
(1) A proxy-server device including:
   a monitoring portion that monitors a request for acquisition of a metafile containing information that a terminal device needs to receive a stream of content, the request being transmitted by the terminal device to a content supply device that delivers the content over a network in accordance with adaptive streaming technology;
   an analysis portion that analyzes the monitored request for acquisition of the metafile; and
   a database portion that accumulates an analysis result of the analysis portion.
(2) The proxy-server device according to (1),
   wherein the monitoring portion additionally monitors a request for acquisition of a stream of the content that the terminal device has transmitted to the content supply device based on the metafile, and
   wherein the analysis portion additionally analyzes the monitored request for acquisition of the stream.
(3) The proxy-server device according to (1) or (2), further including:
   a caching portion that caches at least one of the metafile and the stream delivered over the network in accordance with a priority based on the accumulated analysis result.
(4) The proxy-server device according to (3),
   wherein the caching portion registers or cancels registration of a policy of the caching in accordance with a request from the terminal device.

### Reference Signs List

- 50: content supply system
- 60: content supply device
- 61: channel streamer
- 62: DASH segmenter
- 63: FLUTE streamer
- 64: MPD generator
- 65: WEB server
- 66: multicast server
- 71: network
- 72: CDN
- 73: optimizing proxy server
- 74: MPD portable server
- 75: script server
- 80: terminal device
- 81: reception/playback portion
- 82: registration portion
- 83: script requesting portion
- 200: computer
- 201: CPU

## Claims

1. A proxy-server device comprising:
a monitoring portion that monitors a request for acquisition of a metafile containing information that a terminal device needs to receive a stream of content, the request being transmitted by the terminal device to a content supply device that delivers the content over a network in accordance with adaptive streaming technology;
an analysis portion that analyzes the monitored request for acquisition of the metafile; and
a database portion that accumulates an analysis result of the analysis portion.

2. The proxy-server device according to claim 1,
wherein the monitoring portion additionally monitors a request for acquisition of a stream of the content that the terminal device has transmitted to the content supply device based on the metafile, and
wherein the analysis portion additionally analyzes the monitored request for acquisition of the stream.

3. The proxy-server device according to claim 2, further comprising:
a caching portion that caches at least one of the metafile and the stream delivered over the network in accordance with a priority based on the accumulated analysis result.

4. The proxy-server device according to claim 3,
wherein the caching portion registers or cancels registration of a policy of the caching in accordance with a request from the terminal device.

5. An information processing method of a proxy-server device, the information processing method comprising:
a monitoring step of monitoring, by the proxy-server device, a request for acquisition of a metafile containing information that a terminal device needs to receive a stream of content, the request being transmitted by the terminal device to a content supply device that delivers the content over a network in accordance with adaptive streaming technology; and
an analyzing step of analyzing, by the proxy-server device, the monitored request for acquisition of the metafile, and accumulating the analysis result.

6. A program that causes a computer to function as:
a monitoring portion that monitors a request for acquisition of a metafile containing information that a terminal device needs to receive a stream of content, the request being transmitted by the terminal device to a content supply device that delivers the content over a network in accordance with adaptive streaming technology;
an analysis portion that analyzes the monitored request for acquisition of the metafile; and
a database portion that accumulates an analysis result of the analysis portion.

7. A terminal device comprising:
a reception/playback portion that transmits a request for acquisition of a metafile containing information that the terminal device needs to receive a stream of content to a content supply device that delivers the content over a network in accordance with adaptive streaming technology, receives the metafile delivered from the content supply device in accordance with the request for acquisition of the metafile, transmits a request for acquisition of a stream of the content to the content supply device based on the metafile, and receives and plays back the stream delivered from the content supply device in accordance with the request for acquisition of the stream; and
a registration portion that makes a request for registration of a policy of caching at least one of the metafile and the stream to a proxy-server device that by proxy performs an operation of the content supply device,
wherein the proxy-server device includes
a monitoring portion that monitors a request for acquisition of a metafile containing information that a terminal device needs to receive a stream of the content, the request being transmitted by the terminal device to a content supply device that delivers the content over a network in accordance with adaptive streaming technology,
an analysis portion that analyzes the monitored request for acquisition of the metafile, and
a database portion that accumulates an analysis result of the analysis portion.

8. The terminal device according to claim 7,
wherein the registration portion additionally requests cancellation of registration of the policy of caching to the proxy-server device that by proxy performs an operation of the content supply device.

9. The terminal device according to claim 8, further comprising:
a script requesting portion that requests from a portal server a script that performs a setting for connecting to a proxy-server that is optimal for the terminal device, and performs the setting by executing the script provided from the portal server.

10. A content supply system comprising:
a content supply device that delivers content over a network in accordance with adaptive streaming technology;
a terminal device that receives and plays back a stream of the content; and
a proxy-server device that is provided between the content supply device and the terminal device,
wherein the proxy-server device includes
a monitoring portion that monitors a request for acquisition of a metafile containing information that the terminal device needs to receive a stream of the content, the request being transmitted by the terminal device to the content supply device,
an analysis portion that analyzes the monitored request for acquisition of the metafile, and
a database portion that accumulates an analysis result of the analysis portion, and
wherein the terminal device includes
a reception/playback portion that transmits the request for acquisition of the metafile to the content supply device, receives the metafile delivered from the content supply device in accordance with the request for acquisition of the metafile, transmits the request for acquisition of a stream of the content to the content supply device based on the metafile, and receives and plays back the stream delivered from the content supply device in accordance with the request for acquisition of the stream, and
a registration portion that makes a request for registration of a policy of caching at least one of the metafile and the stream to the proxy-server device that by proxy performs an operation of the content supply device.

## Amended claims

### Amended claims under Art. 19.1 PCT

**1.** (Amended) A proxy server device comprising:
a monitoring portion that monitors a request for acquisition of a metafile containing information that a terminal device needs to receive a stream of content, the request being transmitted by the terminal device to a content supply device that delivers the content over a network in accordance with adaptive streaming technology, and monitors a request for acquisition of a stream of the content that the terminal device has transmitted to the content supply device based on the metafile;
an analysis portion that analyzes the monitored request for acquisition of the metafile and request for acquisition of a stream of the content;
a database portion that accumulates an analysis result of the analysis portion; and
a caching portion that caches at least one of the metafile and the stream delivered over multicast over the network in accordance with a priority based on the accumulated analysis result.

**2.** (Canceled)

**3.** (Canceled)

**4.** (Amended) The proxy server device according to claim 1,
wherein the caching portion registers or cancels registration of a policy of the caching in accordance with a request from the terminal device, and caches at least one of the metafile and the stream delivered over multicast over the network in accordance with also the registered policy of the caching.

**5.** (Amended) An information processing method of a proxy server device, the information processing method comprising:
a monitoring step of monitoring, by the proxy server device, a request for acquisition of a metafile containing information that a terminal device needs to receive a stream of content, the request being transmitted by the terminal device to a content supply device that delivers the content over a network in accordance with adaptive streaming technology, and monitoring a request for acquisition of a stream of the content that the terminal device has transmitted to the content supply device based on the metafile;
an analyzing step of analyzing, by the proxy server device, the monitored request for acquisition of the metafile and request for acquisition of a stream of the content, and accumulating the analysis result; and
a caching step of caching, by the proxy server device, at least one of the metafile and the stream delivered over multicast over the network in accordance with a priority based on the accumulated analysis result.

**6.** (Amended) A program that causes a computer to function as:
a monitoring portion that monitors a request for acquisition of a metafile containing information that a terminal device needs to receive a stream of content, the request being transmitted by the terminal device to a content supply device that delivers the content over a network in accordance with adaptive streaming technology, and monitors a request for acquisition of a stream of the content that the terminal device has transmitted to the content supply device based on the metafile;
an analysis portion that analyzes the monitored request for acquisition of the metafile and request for acquisition of a stream of the content;
a database portion that accumulates an analysis result of the analysis portion; and
a caching portion that caches at least one of the metafile and the stream delivered over multicast over the network in accordance with a priority based on the accumulated analysis result.

**7.** (Amended) A terminal device comprising:
a reception/playback portion that transmits a request for acquisition of a metafile containing information that the terminal device needs to receive a stream of content to a content supply device that delivers the content over a network in accordance with adaptive streaming technology, receives the metafile delivered from the content supply device in accordance with the request for acquisition of the metafile, transmits a request for acquisition of a stream of the content to the content supply device based on the metafile, and receives and plays back the stream delivered from the content supply device in accordance with the request for acquisition of the stream; and
a registration portion that makes a request for registration of a policy of caching at least one of the metafile and the stream to a proxy server device that by proxy performs an operation of the content supply device,
wherein the proxy server device includes
a monitoring portion that monitors a request for acquisition of a metafile containing information that a terminal device needs to receive a stream of the content, the request being transmitted by the terminal device to a content supply device that delivers the content over a network in accordance with adaptive streaming technology, and monitors a request for acquisition of a stream of the content that the terminal device has transmitted to the content supply device based on the metafiles,
an analysis portion that analyzes the monitored request for acquisition of the metafile and request for acquisition of a stream of the content,
a database portion that accumulates an analysis result of the analysis portion, and
a caching portion that caches at least one of the metafile and the stream delivered over multicast over the network in accordance with a priority based on the accumulated analysis result and the registered policy of the caching.

**8.** The terminal device according to claim 7,
wherein the registration portion additionally requests cancellation of registration of the policy of caching to the proxy-server device that by proxy performs an operation of the content supply device.

**9.** The terminal device according to claim 8, further comprising:
a script requesting portion that requests from a portal server a script that performs a setting for connecting to a proxy-server that is optimal for the terminal device, and performs the setting by executing the script provided from the portal server.

**10.** (Amended) A content supply system comprising:
a content supply device that delivers content over a network in accordance with adaptive streaming technology;
a terminal device that receives and plays back a stream of the content; and
a proxy server device that is provided between the content supply device and the terminal device,
wherein the proxy server device includes
a monitoring portion that monitors a request for acquisition of a metafile containing information that the terminal device needs to receive a stream of the content, the request being transmitted by the terminal device to the content supply device, and monitors a request for acquisition of a stream of the content that the terminal device has transmitted to the content supply device based on the metafile,
an analysis portion that analyzes the monitored request for acquisition of the metafile and request for acquisition of a stream of the content,
a database portion that accumulates an analysis result of the analysis portion, and
a caching portion that caches at least one of the metafile and the stream delivered over multicast over the network in accordance with a priority based on the accumulated analysis result and the registered policy of the caching, and
wherein the terminal device includes
a reception/playback portion that transmits the request for acquisition of the metafile to the content supply device, receives the metafile delivered from the content supply device in accordance with the request for acquisition of the metafile, transmits the request for acquisition of a stream of the content to the content supply device based on the metafile, and receives and plays back the stream delivered from the content supply device in accordance with the request for acquisition of the stream, and
a registration portion that makes a request for registration of a policy of caching at least one of the metafile and the stream to the proxy server device that by proxy performs an operation of the content supply device.

Statement under Art. 19.1 PCT
The amendment to Claims 1, 5, 6, 7, and 10 has clarified that, in a proxy server device, an MPD and a stream of content delivered over multicast are cached, and delivered over unicast to a terminal device.

The amendment to Claim 4 has clarified that caching of the MPD and the stream of content is carried out in accordance with not only a priority based on an analysis result but also a policy of the caching registered from the terminal device.
